# EUROPÄISCHE PATENTANMELDUNG

(11) **EP 0 948 185 A1**
(43) Veröffentlichungstag der Anmeldung: **06.10.1999**
(21) Anmeldenummer: 99106045.0
(22) Anmeldetag: 25.03.1999
(51) Int. Cl.: H04M 17/02

(54) **Kommunikationsendgerät zur Aufnahme und Auswertung von Wertkarten oder Münzen**

(30) Priorität: 30.03.1998 DE 19814165
(71) Anmelder: SIEMENS AKTIENGESELLSCHAFT, 80333 München (DE)
(72) Erfinder: Brandstetter, Alfred, 82140 Olching (DE); Schowanek, Emil, 82152 Planegg (DE)

(57) **Zusammenfassung**

Unter Beibehaltung der überwiegend zum Einsatz gelangenden Wertkartenfernsprecher (1, 2,9) soll eine Möglichkeit geschaffen werden, auch Münzen zum Bezahlen einer Dienstleistung zu verwenden.
Dies wird dadurch erreicht, daß dem Wertkartenfernsprecher (1, 2, 9) ein Münzmodul (3) zugeordnet ist.

## Beschreibung

In neuerer Zeit gelangen bei öffentlich zugänglichen Kommunikationsendgeräten fast ausschließlich Wertkartenfernsprecher zum Einsatz, um durch bargeldloses Bezahlen einer Dienstleistung das Aufbrechen von mit Münzen betriebenen Kommunikationsendgeräten zur Entnahme der Münzkassette zu verhindern.

Bei Benutzern derartiger öffentlicher Kommunikationsendgeräte besteht jedoch in vielen Fällen der Wunsch, wahlweise mittels Münzen oder Wertkarten zu telefonieren, da oftmals das momentan benötigte Zahlungsmittel nicht zur Hand ist.

Aufgabe der vorliegenden Erfindung ist es daher, unter Beibehaltung der bisher zum Einsatz gelangenden Wertkartenfernsprecher eine Möglichkeit aufzuzeigen, auch Münzen zum Bezahlen der Dienstleistung zu verwenden.

Diese Aufgabe wird dadurch gelöst, daß einem Wertkartenfernsprecher ein Münzmodul zugeordnet ist.

Durch Zuordnung eines Münzmoduls können in einem Kombinationsgerät gleichzeitig Münzen und Wertkarten bearbeitet werden. Es wird somit ein Wertkartenfernsprecher um das Bezahlmedium Münzen erweitert, wobei noch die Möglichkeit besteht, bereits bei dem Wertkartenfernsprecher vorhandene Einrichtungen wie z.B. Hard- und Software teilweise oder völlig bei dem Münzmodul zu verwenden.

Hierbei kann das Münzmodul in den Wertkartenfernsprecher integriert werden. Eine kostengünstigere Lösung ergibt sich jedoch dadurch, das Münzmodul als separates Bauteil zu gestalten, das mit dem Wertkartenfernsprecher elektrisch und mechanisch verbunden ist. Somit ist eine Möglichkeit geschaffen, verschiedene Typen von Wertkartenfernsprechern mit einem einzigen Münzmodul zu kombinieren.

Bei dieser zuletzt aufgeführten Bauform des Münzmoduls als separates Bauteil hat es sich gezeigt, daß die außermittige Anordnung des Wertkartenfernsprechers auf dem Münzmodul am benutzerfreundlichsten ist. In diesem Fall können auf dem frei zugänglichen Frontabschnitt des Münzmoduls der Münzeinwurf, die Münzrückgabe sowie im Bedarfsfall ein Display zur Anzeige von Betriebszuständen, wie z.B. Anzeige der Restsumme des eingeworfenen Geldbetrages vorgesehen werden. Bei der Anordnung auf der Frontseite des Münzmoduls wird dem Benutzer beim Betreten einer Telefonzelle direkt signalisiert, daß das Kommunikationsendgerät sowohl mit Wertkarten als auch mit Münzen betrieben werden kann. Natürlich besteht auch die Möglichkeit, den Münzeinwurf auf der oberen oder seitlichen Begrenzungsfläche des Münzmoduls vorzusehen, während die Münzrückgabe im unteren vorderen oder seitlichen Bereich des Münzmoduls angeordnet sein kann.

Vorzugsweise wird dieses Münzmodul als zweiteiliges Gehäuse gestaltet, dessen Gehäuseteile zu Wartungszwecken und zum Kassettenwechsel über ein Scharnier schwenkbar verbunden und mittels eines von außen nicht zugänglichen Schlosses elektrisch verriegelbar sind. In seinem Inneren weist dieses Münzmodul als wesentliche Bauteile eine Münzleit- und - prüfvorrichtung sowie eine Münzkassette auf.

Zum Schutz des in die Münzkassette eingeleiteten Geldbetrages können bei diesem Münzmodul eine Reihe von Maßnahmen getroffen werden, die eine ordnungswidrige Entnahme von Münzen erheblich erschweren. So kann die Münzkassette mit einem Sicherheitsmodul ausgestattet werden, das z.B. im Inneren der Münzkassette untergebracht sein kann. In diesem Sicherheitsmodul kann der über die elektronisch arbeitende Münzprüfvorrichtung in die Münzkassette eingeleitete Geldinhalt nach kryptographischer Sicherung eingespeichert werden. Beim Münzkassettenwechsel kann dieser eingespeicherte Wert mit dem tatsächlich in der Münzkassette vorhandenen Geldwert verglichen werden. Durch diese Maßnahme können Manipulationen von Seiten des Wartungspersonals, die unbefugt an die in der Münzkassette befindlichen Münzen gelangen wollen, überprüft werden. Weiterhin kann über dieses Sicherheitsmodul die Zugangsberechtigung zu dem die Münzkassette aufnehmenden Münzmodul gesteuert werden.

Bekanntlich ist bei Münzfernsprechern die wesentliche Schwachstelle das Schloß der die Münzkassette aufnehmenden Kassettenhalterung. Das Schloß kann wegen der geforderten Schließhäufigkeit nur aus Reibungspartnern aufgebaut sein, die für sich keine hohe Festigkeit bzw. keine große Härte oder auch Hitzebeständigkeit besitzen. Gegen einen Angriff auf diese Schwachstelle durch Bohren, Fräsen, Drücken, Schlagen oder Hitze muß daher ein wirksamer Schutz vorhanden sein. Dies läßt sich bei der vorliegenden Erfindung dadurch erreichen, daß das Münzmodul zur Sicherung der Münzkassette durch einen in seinem Inneren angeordneten elektrisch wirkenden Schließmechanismus versperrt ist.

Um diesen Schließmechanismus zu entriegeln, müssen die im folgenden aufgeführten Sicherungskriterien erfüllt werden.

Die mit der Münzkassettenentnahme betraute Person führt eine spezielle, PIN-gesicherte Servicekarte in den Kartenleser ein, worauf eine Authentifizierung über das Sicherheitsmodul erfolgt. Als nächstes wird im Display des Wertkartenfernsprechers oder des Münzmoduls ein Menü angeboten, das unter anderem den Münzkassettenwechsel beinhaltet. Dabei wird eine Verbindung zu einem Hintergrundsystem aufgebaut, das bei dem Wertkartenfernsprecher schon teilweise vorhanden ist. Über diese Verbindung mit dem Hintergrundsystem wird geprüft, ob mit dieser Servicekarte und anderen Randbedingungen (Standort, Zeit) ein Münzkassettenwechsel zulässig ist. Erst bei Übereinstimmung aller kontrollierten Daten wird in einer kryptographisch gesicherten Verbindung zwischen dem Hintergrundsystem und dem der Münzkassette zugeordneten Sicherheitsmodul das Münzmodul kurzfristig zum Kassettenwechsel geöffnet. Hierbei wird der den Kassettenwechsel vornehmenden Person nur eine kurze Zeit, z.B. 20 sec vorgegeben, um gegebenenfalls während eines längeren Zeitraums durchführbare Manipulationen zu unterbinden. Nach Ablauf dieser Zeit erfolgt wiederum eine Verriegelung des Münzmoduls. Bei Einbringen einer neuen Münzkassette wird das ihm zugeordnete Sicherheitsmodul im Hintergrundsystem angemeldet, das Münzmodul verriegelt und die Verbindung beendet.

Zur Klärung von Inplausibilitäten können beim Vorgang des Münzkassettenwechsels im Sicherheitsmodul und/oder im Hintergrundsystem weitere Daten abgespeichert werden, die später herangezogen werden können.

Gemäß einer weiteren Ausgestaltung der Erfindung kann das Kommunikationsendgerät auch dazu verwendet werden, eingegebene Münzen auf die im Kartenleser eingebrachte Wertkarte einzulesen, d.h., der eingegebene Münzbetrag wird auf der Wertkarte als Guthaben gebucht.

Die Erfindung soll im folgenden anhand von Ausführungsbeispielen näher erläutert werden.

Es zeigt jeweils in perspektivischer Ansicht,
Figur 1 eine erste Ausführungsform eines auf ein separates Münzmodul angeordneten Wertkartenfernsprechers,
Figur 2 eine zweite Ausführungsform eines mit einem separaten Münzmodul verbundenen Wertkartenfernsprechers.
Figur 3 eine dritte Ausführungsform eines mit einem separaten Münzmodul verbundenen Wertkartenfernsprechers.

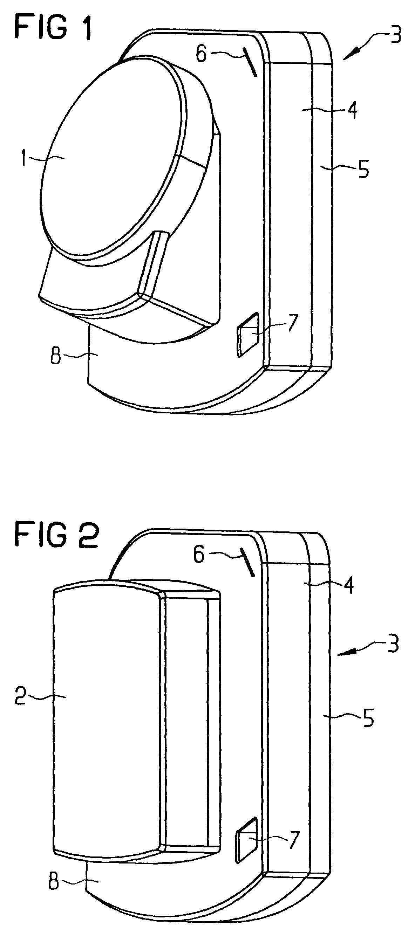

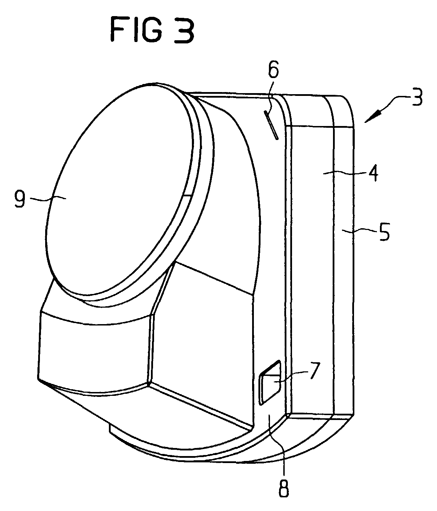

Bei den vorliegenden Anordnungen soll bei einem Wertkartenfernsprecher die Möglichkeit geschaffen werden, zum Telefonieren neben der Wertkarte auch Münzen zu verwenden. Zu diesem Zweck sind den in den Figuren 1, 2 und 3 dargestellten Wertkartenfernsprechern 1, 2 und 9 jeweils das gleiche Münzmodul 3 zugeordnet. Diese beiden jeweils kombinierten Geräte 1 und 3 bzw. 2 und 3 bzw. 9 und 3 sind miteinander elektrisch und mechanisch verbunden.

Das Münzmodul 3 ist als separates Bauteil gestaltet und besteht aus den beiden Gehäuseteilen 4 und 5, die zu Wartungs- und Montagezwecken bzw. zum Kassettenwechsel über hier nicht dargestellte Scharniere schwenkbar verbunden sind. Beide Gehäuseteile 4 und 5 sind im geschlossenen Zustand durch ein von außen nicht zugängliches, nur elektrisch betätigbares Schloß miteinander verriegelt.

Die drei Wertkartenfernsprecher sind in den Ausführungsbeispielen nur angedeutet, ohne Details wie Kartenaufnahme, Hörer und Anschlußschnur, Sondertasten usw. näher zu zeigen. Hierbei ist lediglich die jeweilige außermittige Befestigung der Wertkartenfernsprecher 1, 2 und 9 auf dem Münzmodul 3 von Bedeutung, da durch diese Plazierung auf der in der Bildebene rechts befindlichen Vorderfront 8 des Gehäuseteils 4 hinreichend Platz zur Verfügung steht, um den als Schlitz gestalteten Münzeinwurf 6 sowie die Münzrückgabe 7 vorzusehen. Durch eine derartige Anordnung von Wertkartenfernsprecher 1 und 2 sowie Münzeinwurf 6 und Münzrückgabe 7 wird dem Benutzer signalisiert, daß er dieses öffentliche Kommunikationsendgerät wahlweise mit Münzen oder Wertkarten betreiben kann.

Innerhalb des Münzmoduls 3 können Vorrichtungen zur elektronischen Prüfung und Weiterleitung von Münzen sowie eine Münzkassette vorgesehen werden. Auf eine mögliche Sicherung der Münzkassette sowie Sicherungsmaßnahmen beim Münzkassettenwechsel wurde bereits in der Beschreibungseinleitung eingegangen.

## Patentansprüche

1. Kommunikationsendgerät zur Aufnahme und Auswertung von Wertkarten oder Münzen, **dadurch gekennzeichnet,** daß einem Wertkartenfernsprecher (1, 2) ein Münzmodul (3) zugeordnet ist.

2. Kommunikationsendgerät nach Anspruch 1, **dadurch gekennzeichnet,** daß das Münzmodul (3) in den Wertkartenfernsprecher (1, 2) integriert ist.

3. Kommunikationsendgerät nach Anspruch 1, **dadurch gekennzeichnet,** daß das Münzmodul (3) als separates Bauteil gestaltet ist, das mit dem Wertkartenfernsprecher (1, 2) elektrisch und mechanisch verbunden ist.

4. Kommunikationsendgerät nach Anspruch 3, **dadurch gekennzeichnet,** daß der Wertkartenfernsprecher (1, 2) außermittig auf dem Münzmodul (3) angeordnet ist, wobei im frei zugänglichen Frontabschnitt (8) des Münzmoduls (3) der Münzeinwurf (6), die Münzrückgabe (7) sowie ein Display zur Anzeige von Betriebszuständen vorgesehen sind.

5. Kommunikationsendgerät nach Anspruch 3, **dadurch gekennzeichnet,** daß das Münzmodul als zweiteiliges Gehäuse ausgebildet ist, dessen Gehäuseteile (4, 5) über ein Scharnier schwenkbar verbunden und mittels eines elektrisch betätigbaren Schlosses verriegelbar sind.

6. Kommunikationsendgerät nach Anspruch 1 und Anspruch 3, **dadurch gekennzeichnet,** daß als wesentliche Bauteile innerhalb des Münzmoduls (3) eine Münzleit- und prüfvorrichtung sowie eine Münzkassette angeordnet sind.

7. Kommunikationsendgerät nach Anspruch 6, **dadurch gekennzeichnet,** daß die Münzkassette mit einem Sicherungsmodul ausgestattet ist.

8. Kommunikationsendgerät nach Anspruch 7, **dadurch gekennzeichnet,** daß der über die Münzprüfvorrichtung in die Münzkassette eingeleitete Geldinhalt kryptographisch gesichert in das Sicherheitsmodul eingespeichert wird und beim Kassettenwechsel der eingespeicherte Wert mit dem in der Münzkassette vorhandenen Geldwert verglichen wird.

9. Kommunikationsendgerät nach Anspruch 7, **dadurch gekennzeichnet,** daß über das Sicherheitsmodul die Zugangsberechtigung zu dem Münzmodul gesteuert wird.

10. Kommunikationsendgerät nach Anspruch 6, **dadurch gekennzeichnet,** daß das Münzmodul durch einen in seinem Inneren angeordneten, elektrisch wirkenden Schließmechanismus versperrt ist.

11. Kommunikationsendgerät nach Anspruch 6 und Anspruch 10, **dadurch gekennzeichnet**, daß das Wechseln der Münzkassette durch folgende Kriterien gesteuert wird:
- die mit dem Austausch der Münzkassette beauftragte Person gibt eine spezielle PIN-gesicherte Servicekarte in den Kartenleser ein, worauf eine Authentifizierung über das Sicherheitsmodul erfolgt;
- im Display des Münzmoduls oder des Wertkartenfernsprechers wird ein Menü angeboten, das unter anderem den Münzkassettenwechsel beinhaltet und den Aufbau einer Verbindung zu einem bereits beim Wertkartenfernsprecher teilweise vorhandenen Hintergrundsystem bewirkt;
- über die Verbindung zu dem Hintergrundsystem wird kontrolliert, ob mit der Servicekarte und anderen Sicherungsmaßnahmen (Standort, Zeitangabe) ein Kassettenwechsel zulässig ist;
- bei Übereinstimmung aller Daten zwischen dem Hintergrundsystem und dem der Münzkassette zugeordneten Sicherheitsmodul wird über eine kryptographisch gesicherte Verbindung das Münzmodul kurzfristig geöffnet;
- nach Einlegen einer leeren Münzkassette wird das ihr zugeordnete Sicherheitsmodul im Hintergrundsystem angemeldet, das Münzmodul verriegelt und die Verbindung beendet.

12. Kommunikationsendgerät nach Anspruch 11, **dadurch gekennzeichnet**, daß im Sicherheitsmodul und/oder Hintergrundsystem weitere Daten zum Münzkassettenwechsel gespeichert sind.

13. Kommunikationsendgerät nach Anspruch 1, **dadurch gekennzeichnet**, daß mittels des Kommunikationsendgerätes ein Einbuchen von eingegebenen Münzen auf eine Wertkarte durchführbar ist.
